# EUROPÄISCHE PATENTSCHRIFT

(11) **EP 0 569 775 B1**
(45) Veröffentlichungstag und Bekanntmachung des Hinweises auf die Patenterteilung: **29.12.1997**
(21) Anmeldenummer: 93106874.6
(22) Anmeldetag: 28.04.1993
(51) Int. Cl.: B23Q 5/40, F16H 25/20

(54) **Spindelantrieb mit Schnellentriegelung der Antriebsspindel**
Spindle drive with quick release drive spindle
Entraînement des broches avec débrayage rapide de la broche d'entraînement

(30) Priorität: 07.05.1992 DE 4215098
(43) Veröffentlichungstag der Anmeldung: 18.11.1993
(73) Patentinhaber: A RÖMHELD GmbH & CO KG, 35321 Laubach (DE)
(72) Erfinder: Becker, Karl Heinz, D-35321 Laubach (DE); Sames, Stephan, D-35325 Mücke (DE)
(74) Vertreter: Bischof, Hans-Jochen, Dipl.-Ing.

(56) Entgegenhaltungen:
- DE-A- 2 805 141
- DE-A- 3 228 646
- FR-A- 2 601 731
- GB-A- 1 073 204
- GB-A- 1 451 888
- US-A- 2 770 155

## Beschreibung

Die Erfindung bezieht sich auf einen Spindelantrieb mit Schnellentriegelung der Arbeitsspindel. Auf der Arbeitsspindel ist ein Spindelkäfig gefuhrt und die Verbindung zwischen Arbeitsspindel und Spindelkäfig erfolgt über Kugeln. Der Spindelkäfig ist von einem Rohr umgeben, das mit Aussparungen zur Aufnahme der Kugeln in einer Arbeitsebene versehen ist, so daß der Kraftschluß zwischen Spindel und Spindelkäfig durch Verschieben des Rohres herbeigeführt wird.

Spindelantriebe sind in der Regel so aufgebaut, daß eine feste Verbindung zwischen der Spindelmutter und der Spindel besteht, so daß ein ständiger Krafteingriff zwischen diesen beiden Teilen vorhanden ist. In der Regel bedarf die Verstellung der Spindelmutter auf der Spindel eines relativ großen Weges in der Drehbewegung der Spindel, um einen entsprechenden Hub der Spindelmutter herbeizuführen. Die Kraftübertragung zwischen der Spindelmutter und der Spindel erfolgt durch einen Kugelumlauf, hierzu werden zwischen dem Außengewinde der Spindel und dem Innengewinde der Spindelmutter Kugelkanäle angeordnet, die zur Übertragung der Axialkräfte dienen.

In zahlreichen Fällen ist es jedoch erforderlich, daß die Verstellung des Schubrohres schnell vonstatten geht, was bedeutet, daß der Krafteingriff zwischen Spindelmutter und Schubrohr lösbar sein muß. Gerade bei motorisch angetriebenen Spindeln ist eine schnelle Verschiebbarkeit des Schubrohres gegenüber der Spindel wünschenswert. Diese Verschiebung erfolgt von Hand. Um die Kraftübertragung zwischen Schubrohr und Spindelmutter bzw. Spindel zu lösen, sind verschiedene Lösungsvorschläge bekannt.

So ist aus der Schrift GB 1 451 888 ein Spindelantrieb mit Schnellentriegelung bekannt, bei dem auf der Spindel ein Spindelkäfig gleitet und die Kraftübertragungen durch dazwischenliegende Kugeln erfolgt. Der Spindelkäfig weist im Bereich der Kugeln Durchgangsbohrungen zur gleitenden Aufnahme der Kugeln aufund seine Wandstärke ist kleiner als der Kugeldurchmesser. Um den Spindelkäfig ist ein Schubrohr geführt, das zwei Arbeitsebenen im Innern aufweist in der einen Ebene sind Aussparungen vorgesehen, in die die Kugeln gleiten können.

Der vorliegenden Erfindung liegt die Aufgabe zugrunde, den Spindelantrieb so zu gestalten, daß der gesamte Arbeitsbereich durch den Spindelantrieb durchführbar ist, aber auch mit entsperrter Spindel schnell von Hand verstellt werden kann. Die Erfindung sieht vor, daß die Spindel injeder Lage entriegelbar ist, und nach Verstellung des Spindelkäfigs auf der Spindel in der neuen gewünschten Position schnell wieder verriegelbar ist.

Erfindungsgemäß geschieht das durch ein zwischen Schubrohr und Spindelkäfig eingefügtes Auslöserohr, dessen Funktionen und Verstellmöglichkeiten Merkmale der Kennzeichen in den Ansprüchen sind.

Die Erfindung bietet damit den Vorteil, daß die Entriegelung des Antriebes über ein Zwischenglied erfolgt, so daß der Spindelkäfig auf der Spindelstange hin- und hergeschoben werden kann. Die Bewegung des Auslöserohres ist hierbei minimal, in der Regel braucht es nur um eine Steigung der Gewindespindel zu sein. Damit ist die Gewähr gegeben, daß das Spindelrohr nach Lösen des Spindelantriebes schnell verschiebbar ist und schnell in eine andere Lage gebracht werden kann und daß nach Einlegen des Spindelantriebes die Restbewegung über die Spindel selbst vollzogen werden kann.

Die Erfindung ist an den Beispielen der Zeichnung näher erläutert.

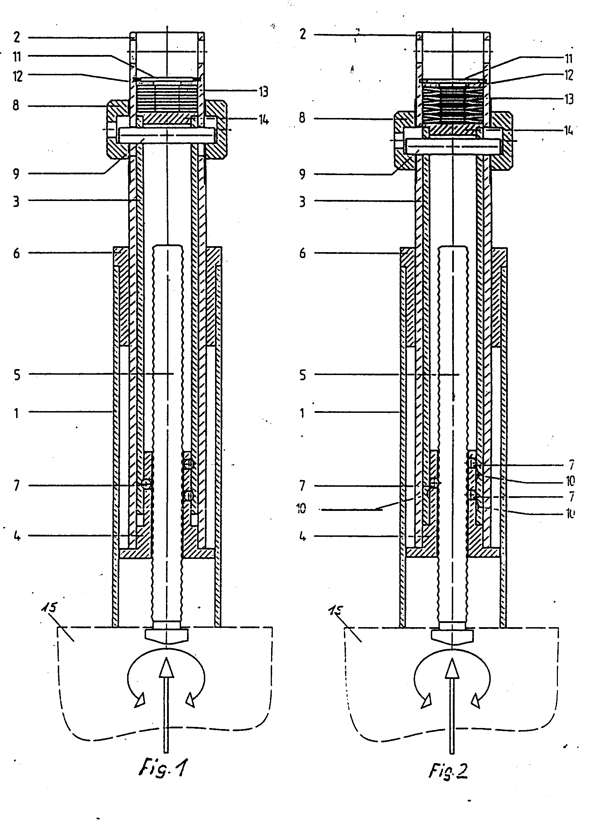

Die Figur 1 zeigt den Spindelantrieb mit nicht im Eingriff befindlicher Spindel, und die Fig. 2 zeigt den Spindelantrieb mit im Eingriff befindlicher Spindel.

Das Gehäuse 1 nimmt den Spindelantrieb und den Verstellmechanismus auf. Im Inneren des Gehäuses 1 wird das Schubrohr 2 beweglich geführt, dazu dienen einmal die Führungsbahnen 6. An seinem unteren Ende ist das Schubrohr 2 fest mit dem Spindelkäfig 4 verbunden. Der Spindelkäfig 4 stützt sich seinerseits an der Innenwandung des Gehäuses 1 ab. Zwischen dem Spindelkäfig 4 und dem Schubrohr 2 ist ein Auslöserohr 3 angeordnet. Dieses Auslöserohr 3 ist gegenüber dem Schubrohr 2 und gegenüber dem Spindelkäfig 4 verschiebbar. Der Spindelkäfig 4 ist dementsprechend im Bereich des Auslöserohres 3 mit einem Kleineren Durchmesser versehen. Der Spindelkäfig 4 besitzt aber gleichzeitig unterhalb des Auslöserohres 3 eine Auflagefläche, auf die sich das Auslöserohr 3 abstützen kann. Im Inneren des Spindelkäfigs 4 ist die Spindel 5 geführt. Der Spindelkäfig 4 hat in seiner Wandung durchgehende Bohrungen, in die die Kugeln 7 eingebracht sind. Das Auslöserohr 3 besitzt nun im Bereich des Spindelkäfigs Aussparungen 10 zur Aufnahme der Kugeln 7.

Im oberen Kopf des Schubrohres 2 ist eine Vorrichtung vorgesehen, die zur Auslösung des Mechanismus dient. Das Auslöserohr 2 ist dementsprechend mit einer durchgehenden Bohrung oder entsprechendem Äquivalent versehen, in dem der Mitnehmer 9 gelagert ist. Gleichfalls ist das Auslöserohr 3 mit einer entsprechenden Bohrung oder einem Äquivalent versehen, durch das der Mitnehmer 9 geführt ist. Damit kann durch Betätigung des Mitnehmers 9 die Relativbewegung zwischen dem Schubrohr 2 und dem Auslöserohr 3 herbeigeführt werden. Das Auslöserohr 3 wird innerhalb des Schubrohres 2 an seinem oberen Ende durch eine Stützvorrichtung 14 begrenzt, wobei die Stützvorrichtung 14 auf eine Tellerfeder 13 wirkt, die ihrerseits durch ein Abschlußteil 11 fest im Schubrohr 2 verankert ist. Der Mitnehmer 9 ist mit einem Verstellglied 8 verbunden. Dieses Verstellglied 8 kann ein drehendes oder ein schiebbares Teil sein. Vorzugsweise bietet sich ein drehendes Teil an, so daß durch eine Drehbewegung auf einer schiefen Ebene der Mitnehmer 9 heb- und senkbar ist. Teil 12 ist ein Aufnahmering für die Tellerfeder.

In Figur 1 befindet sich das Auslöserohr in der Stellung, in der die Ausnehmung 10 sich genau im Bereich der Kugel 7 befindet, so daß die Kugeln 7 in diese Ausnehmung gleiten und damit der Kraftschluß zwischen Spindelkäfig und Spindel unterbrochen ist.

In Figur 2 befindet sich dagegen das Auslöserohr 3 in einer Stellung, wo die Ausnehmung 10 außerhalb des Bereiches der Kugeln 7 ist, so daß sich die Kugeln 7 gegen die Wandung des Auslöserohres 3 abstützen und damit in Eingriff mit der Spindel stehen, so daß die Spindel kraftschlüssig mit dem Spindelkäfig verbunden ist.

Die Funktion ist folgende:
Um den Kraftschluß - gemäß Figur 1 - zu lösen, wird das Verstellglied 8 von Hand betätigt, und zwar derart, daß der Mitnehmer 9 angehoben wird. Damit verschiebt sich das Auslöserohr 3 gegenüber dem Schubrohr 2, indem es um den Betrag einer Spindelsteigung angehoben wird. Gleichzeitig wird mit dieser Drehbewegung die Stützvorrichtung 14 angehoben und die Tellerfeder 13 zusammengedrückt. Nunmehr befindet sich das Auslöserohr 3 mit seiner Ausnehmung 10 genau im Bereich der Kugel 7, womit die Kugel 7 in diese Ausnehmung gleitet. Damit ist die Kugel 7 aus dem Bereich der Steigungen der Spindel 5 herausgerückt, und der Kraftfluß ist unterbrochen. Nunmehr läßt sich das Schubrohr 2 von Hand auf- und abbewegen. Wird es bewegt, so gleitet es innerhalb der Buchsen 6 im Gehäuse 1 auf und ab. Mit der Bewegung des Schubrohres 2 werden aber der Spindelkäfig 4 - da dieser fest mit dem Schubrohr 2 verbunden ist - und das Auslöserohr 3 mit bewegt. Letzteres einmal durch die in den Ausnehmungen 10 liegenden Kugeln und zum anderen über den Mitnehmer 9. Der Spindelkäfig 4 kann hierbei leicht auf der Spindel 5 gleiten, da der Kraftschluß unterbrochen ist. Das Schubrohr 2 wird somit von Hand in die gewünschte Stellung gebracht, und sobald diese erreicht ist, wird das Verstellglied 8 wieder betätigt, womit das Auslösrohr 3 über den Mitnehmer 9 nach unten bewegt wird, bis es auf dem Spindelkäfig aufsitzt. In dieser Stellung wird es durch die Kraft der Tellerfeder 13, die sich nunmehr entspannt hat, gedrückt, und es tritt der Zustand ein, wie er in Figur 2 dargestellt ist. Die Kugeln 7 sind aus der Ausnehmung 10 herausgeglitten und stützen sich jetzt an der Innenwand des Auslöserohres 3 ab und werden damit aus der Bohrung des Spindelkäfigs 4 in Richtung Spindel 5 herausgedrückt. Damit entsteht eine Kraftschlußverbindung zwischen dem Spindelkäfig 4 und der Spindel 5. Wird nunmehr die im Getriebegehäuse 15 gelagerte Spindel 5 motorisch angetrieben, erfolgt die Feinverstellung des Schubrohres 2.

Die Ausführung gem. Fig. 1 und 2 geht davon aus, daß in dem Auslöserohr 3 Aussparungen 10 eingebracht sind, so daß durch die Längsbewegung des Auslöserohres 3 die Kugeln 7 in die Aussparungen 10 gelangen, womit die Kraftübertragung zwischen Spindel 5 und Spindelkäfig 4 unterbrochen ist.

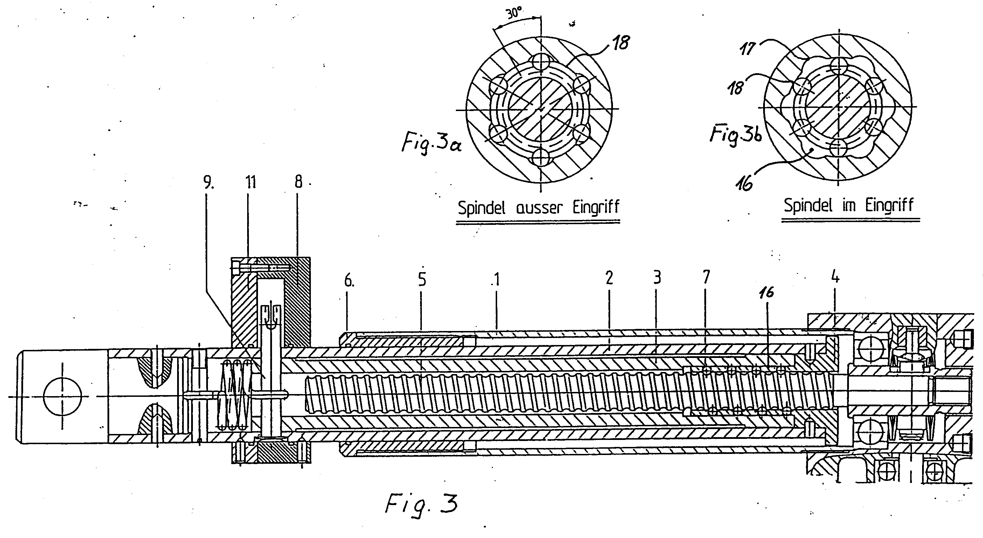

Eine weitere Ausführung der Erfindung sieht dagegen vor, daß die Unterbrechung der Kraftübertragung allein durch eine Drehbewegung des Auslöserohres hervorgerufen wird. Diese Ausführung ist in Fig. 3; 3a, 3b dargestellt.

Die Fig. 3 zeigt einen Aufbau wie Fig. 1 und 2. Die Kraftübertragung erfolgt ebnfalls über Kugeln 7, die zwischen Kugelkäfig 4 und Spindel 5 wirken. Das Auslöserohr 3 ist jedoch mit einer Ausnehmung 16 versehen, die innerhalb des Auslöserohres 3 kreisförmig umläuft, wie aus Fig. 3a und 3b ersichtlich. Ferner ist die Ausnehmung 16 auf dem Umfang gleichmässig - vorzugsweise im Abstand von 60° - mit Aussparungen 17 versehen. Die Größe dieser Aussparungen 17 ist den Kugeln 7 angepaßt, so daß diese in die Aussparungen gleiten. Zwischen den Aussparungen 17 ist die Ausnehmung 16 mit Gleitflächen versehen, die in Kraftschlußflächen 18 übergehen.

Die Wirkungsweise ist folgende:
Wird das Ausloserohr 3 gegenüber dem Spindelkäfig 4 gedreht, und zwar um 30° gem. Fig. 3a, so gelangen die Kugeln 7 in die Aussparungen 17 der Ausnehmung 16. Damit befinden sich die Kugeln 7 ausserhalb des Eingriffsbereiches der Spindel 5 und das Auslöserohr 3 und damit das Schubrohr 2 lassen sich auf der Spindel leicht verschieben. Erfolgt erneut eine Drehung des Auslöserohres 3 um 30°, so gelangen die Kugeln 7 in den Bereich der Kraftschlußflächen 18 und stehen damit im Eingriff mit der Spindel 5. Nunmehr kann eine Bewegung von Schubrohr und Auslöserohr nur über die Spindeldrehung erfolgen.

Selbstverständlich kann eine Begrenzung der Drehbewegung des Auslöserohres vorgesehen werden, so daß nur eine Drehung desselben um jeweils 30° möglich ist.

## Patentansprüche

1. Spindelantrieb mit Schnellentriegelung der Arbeitsspindel, in dem ein von einem Schubrohr (2) umgebener Spindelkäfig (4) auf der Spindel gleitet und die Spindel mit dem Spindelkäfig (4) über dazwischenliegende Kugeln (7) im Eingriff steht und der Spindelkäfig (4) mit Durchgangsbohrungen für die Aufnahme der Kugeln versehen ist, wobei die Wandstärke der Durchgangsbohrungen Kleiner als der Durchmesser der Kugeln ist und die Lage der Kugeln, und damit die Verbindung zwischen Spindelkäfig und Spindel, durch eine Verschiebung des Schubrohres (2) erfolgt, das in zwei Ebenen schiebbar ist und in der einen Ebene in der Innenwand Aussparungen (10; 17) zur Aufnahme der Kugeln besitzt und in der anderen Ebene die Durchgangsbohrungen des Spindelkäfigs nach außen abschließt, ***dadurch gekennzeichnet,*** daß in einem Gehäuse (1) das Schubrohr (2) gleitend geführt und an seinem unteren Ende mit dem Spindelkäfig (4) fest verbunden ist, daß der Spindelkäfig (4) im oberen Bereich verjüngt ist und ein in Längsrichtung verschiebbares Auslöserohr (3) aufnimmt, das im Innern des Schubrohres (2) und aufdem Spindelkäfig gleitend geführt ist, daß das Auslöserohr (3) zwei Arbeitsebenen zur Lagebestimmung der Kugeln (7) besitzt und daß am Kopf des aus dem Gehäuse (1) herausragenden Schubrohres (2) ein mit dem Auslöserohr (3) verbundenes Verstellglied angeordnet ist, das gegenüber dem Schubrohr (2) verschiebbar wirksam ist, so daß durch die Hubbewegung im Verstellglied (8) das Auslöserohr (3) in die beiden Arbeitsebenen auf dem Spindelkäfig (4) rückbar ist.

2. Spindelantrieb nach Anspruch 1, ***dadurch gekennzeichnet,*** daß das Auslöserohr (3) kreisförmig umlaufende Ausnehmungen (16) aufweist, in die dem Kugeldurchmesser (7) angepaßte Aussparungen (17) eingebracht sind, so daß bei einer Drehung des Auslöserohres (3) um ca. 30° die Kraftübertragung zwischen Spindelkäfig (4) und Spindel (5) beeinflußbar ist.

## Claims

1. Spindle drive with quick-release drive spindle, a spindle cage (4), which is surrounded by a sliding tube (2), slides on the spindle and the spindle is engaged said spindle cage (4) via balls disposed therebetween, and wherein said spindle cage (4) is provided with through-holes for receiving the balls, with the thickness of the walls of said through-holes being smaller than the diameter of the balls and positioning of the balls, and hence the connection between said spindle cage and the spindle, being effected by a displacement of said sliding tube (2) which is displaceable in two planes and presents, in the first plane, recesses (10; 17) in the inner wall for receiving the balls, and closes, in the second plane, said through-holes of said spindle cage to the outside, ***characterised in that*** said sliding tube (2) is slidingly guided in a housing (1) and is fixedly connected by ist lower end to said spindle cage (4), that said spindle cage (4) is tapering in its upper part and receives a releasing tube (3) adapted for longitudinal displacement, which is guided inside said sliding tube (2) for sliding on said spindle cage, that said releasing tube (3) has two operating levels for positioning said balls (7), and that an adjusting member is disposed at the head of said sliding tube (2), which projects from said housing (1), with this member being connected to said releasing tube (3) and being operative for sliding relative to said sliding tube (2) such that the stroke movement in said adjusting member may engage said, releasing tube (3) in the two operating levels on said spindle cage (4).

2. Spindle drive according to Claim 1, ***characterised in that*** said releasing tube (3) comprises circular peripheral recesses (16) in which recesses (17) are formed which are matched with the diameter of said balls (7) such that with a rotation of said releasing tube (3) through 30° an influence may be taken on the transmission off forces between said spindle cage (4) and said spindle (5).

## Revendications

1. Système d'entraînement des broches à débrayage rapide de la broche moteur, dans lequel une cage de broche (4), qui est entourée par un tube curseur (2), glisse sur la broche et la broche s'engrène dans ladite cage de broche (4) via des billes disposées y entre, et ladite cage de broche (4) présente des alésages de passage à recevoir les billes, l'épaisseur de paroi desdits alésages de passage étant plus petite que le diamètre des billes, et la position desdites billes, et ainsi la connexion entre ladite cage de broche et la broche, étant réalisées par un déplacement dudit tube curseur (2) qui est déplaçable dans deux plans et qui présente, dans le premier plan, des évidements (10; 17) dans la paroi intérieure à recevoir les billes, et qui recouvre, dans le deuxième plan, lesdits alésages de passage de ladite cage de broche vers l'extérieur, ***caractérise en ce*** que ledit tube curseur (2) est guidé à glissement dans un carter (1) et est rendu solidaire, par son extrémité inférieur, à ladite cage de broche (4), en ce que ladite cage de broche (4) est conique dans sa partie supérieure et reçoit un tube déclencheur (3) déplaçable en sens longitudinal, qui est guidé à l'intérieur du tube curseur (2) de manière à glisser sur ladite cage de broche, en ce que ledit tube déclencheur (3) a deux niveaux de travail pour le positionnement desdites billes (7), et en ce qu'un organe d'ajustage est disposé à la tête dudit tube curseur (2), qui se trouve en saillie dudit carter (1), cet élément étant relié audit tube déclencheur (3) en étant opératoire de façon déplaçable relativement audit tube curseur (2), de manière que le mouvement de course dans ledit organe d'ajustage puisse embrayer ledit tube déclencheur (3) dans les deux niveaux de travail sur ladite cage de broche (4).

2. Système d'entraînement des broches selon la revendication 1, ***caractérisé en ce*** que ledit tube déclencheur (3) comprend des évidements périphériques circulaires (16), dans lesquels sont formés des évidements (17) adaptés au diamètre desdites billes (7), de façon qu'à une rotation dudit tube déclencheur (3) par 30° on peut prendre de l'influence sur la transmission de force motrice entre ladite cage de broche (4) et ladite broche (5).
